# EUROPEAN PATENT APPLICATION

(11) **EP 3 435 139 A1**
(43) Date of publication of application: **30.01.2019**
(21) Application number: 17305999.9
(22) Date of filing: 25.07.2017
(51) Int. Cl.: G02B 27/01, G02B 5/20, G03H 1/04

(54) **OPTICAL ARTICLE WITH A HOLOGRAPHIC WAVEGUIDE**

(71) Applicant: Essilor International, 94220 Charenton-le-Pont (FR)
(72) Inventor: BOUCHIER, Aude, 94220 CHARENTON LE PONT (FR); BIVER, Claudine, 94220 CHARENTON LE PONT (FR)
(74) Representative: Cabinet Plasseraud

(57) **Abstract**

Optical article (200) comprising at least:
- a substrate (201), and
- a holographic waveguide (202) covering at least part of the substrate (201) and comprising :
- two main surfaces (203, 204), at least one of them conforming to a surface (201a) of the substrate (201), and
- at least first and second zones (Z1, Z2) that are configured so that light incoming on one of the first and second zones (Z1; Z2) is at least partially guided towards the other of said first and second zones (Z2; Z1).

## Description

### Field of the invention

The present invention relates to the integration of passive and active components within smart eyeglasses and windows, for example, and to the selective collection of light arriving on such smart devices as well as the selective emission of light in the direction of the user.

### Background of the invention

The integration of components within smart eyeglasses or windows has many interesting applications.

For example, in the case of electrochromic (EC) or liquid crystal glasses and windows, sensors are used to measure the luminosity of the environment and to control the activation of the electrochromic elements or liquid crystals to avoid glare for the user.

However, the autonomy of such smart glasses and windows is limited by the batteries that can be integrated within their frame. Integration of sensors within such optical devices can also be complicated given the limited space available, and can require making holes or special adaptations of the frame.

Another example of smart eyeglasses are head mounted displays, wherein light produced by a display is directed in the direction of the eye of the wearer using glass plates having facets to reflect the light emitted by the display in the direction of the eye of the wearer.

For instance, an embodiment of head mounted display is disclosed in document WO2013/138107.

These glass plates have a thickness of few mm and are bulky. Moreover, they are necessarily flat, which render their integration in the glasses of everyday life eyewear uneasy. The resulting device can be heavy, uncomfortable and unaesthetic for the wearer.

Some eyeglasses are also equipped with filters adapted to selectively reflect light of unwanted wavelengths such as UV or some blue wavelengths, in order to avoid that such wavelengths be directed towards the wearer. However, these filters can reflect light towards other users and may also induce unaesthetic colored reflections. It would be thus desirable to provide a selective filter which allows collection of unwanted wavelengths without reflecting the latter towards other users.

There is thus a need to improve the selective directed emission of light towards the user in applications such as head mounted displays in smart eyeglasses, in addition to the need for a selective collection of light received by the eyewear or windows in applications in which a filter or a sensor is integrated to an optical device.

### Presentation of the invention

In view of the above, one aim of the invention is to alleviate at least part of the inconveniences of the prior art.

In particular, one aim of the invention is to render easier the integration of smart components such as a sensor, a display, or a photovoltaic cell into an optical device, while keeping such optical device of compact design.

Another aim of the invention is to allow selective collection of wavelengths directed towards an optical device without reflecting those wavelengths towards other users.

Another aim of the invention is to allow the manufacturing of eyeglasses incorporating head mounted displays which are lighter, more comfortable and aesthetic for users.

To this end, it is proposed, according to a first aspect, an optical article comprising at least:
- a substrate, and
- a holographic waveguide covering at least part of the substrate and comprising:
   - two main surfaces, at least one of them conforming to a surface of the substrate, and
   - at least first and second zones that are configured so that light incoming on one of the first and second zones is at least partially guided towards the other of said first and second zones.

According to the invention, the holographic waveguide is formed of a photosensitive material comprising a refractive index varying spatially according to at least one frequency.

According to one embodiment, the holographic waveguide further comprises one peripheral edge, the first zone comprises at least a portion of the peripheral edge of the holographic waveguide, and the second zone comprises at least a portion of one of the main surfaces of the holographic waveguide.

In embodiments, the optical article may further comprise one or a combination of the following features:
- the holographic waveguide extends over at least 10% of the surface of the substrate, preferably over at least 50% of said surface, even more preferably over at least 70% of said surface and even more preferably over the whole surface of the substrate,
- the optical article comprises a plurality of holographic waveguides,
- the waveguides are superposed on one another,
- the waveguides extend over different portions of the surface of the substrate,
- each holographic waveguide is configured to selectively propagate respectively different wavelengths of light between its respective first and second zones,
- rays of light propagated by each holographic waveguide come in or come out from the waveguide's respective second zone according to different angles relative to the normal to said second zone,
- the optical article further comprises a coupling device located on the periphery of one main surface of the waveguide, and configured to couple light propagating within the waveguide into or out of the holographic waveguide,
- the coupling device is preferably chosen from one of a coating or a protrusion and/or depression structure,
- the first zone extends over at least 50 % of the peripheral edge of the holographic waveguide, preferably over at least 70% of said peripheral edge, even more preferably over the whole surface of said peripheral edge,
- the substrate is chosen from a group consisting of:
   ∘ a planar substrate,
   ∘ a curved substrate,
   ∘ a semi-finished lens blank or an ophthalmic lens, wherein the ophthalmic lens may be a contact lens,
- at least one of the main surfaces of the holographic waveguide extends parallel to a curved surface of the substrate,
- the two main surfaces of the holographic waveguide form a front surface and a rear surface, the rear surface being intended to be directed in the direction of an eye of a wearer, the front surface being intended to be directed towards an exterior environment and the second zone is an input zone and the first zone is an output zone.

It is also proposed, according to a second aspect, an optical device comprising:
- an optical article according to any of the preceding embodiments, and further comprises:
   - at least a sensor, a photovoltaic cell, a light trap or an absorber configured to receive light output at the first zone or by a coupling device located on the periphery of one main surface of the waveguide and configured to couple light propagating within the waveguide into or out of the holographic waveguide, the coupling device being preferably chosen from one of a coating or a protrusion and/or depression structure, or
   - at least a light emitter configured to emit light intended to be coupled into the holographic waveguide towards the second zone.

In embodiments, the optical article may further comprise one or a combination of the following features:
- said at least a sensor, a photovoltaic cell, a light emitter, a light trap or an absorber is placed on the substrate,
- the optical article is intended to be mounted on a frame and at least a sensor, a photovoltaic cell, a light trap, an absorber or a light emitter is placed on the frame in the vicinity of the holographic waveguide,

It is also proposed, according to a third aspect, a method for selectively propagating light in a substrate comprising the steps of:
- providing an optical article comprising a substrate, and a holographic waveguide covering at least part of the substrate and comprising:
- two main surfaces, at least one of them conforming to a surface of the substrate, and
- at least first and second zones that are configured so that light incoming on one of the first and second zones is at least partially guided towards the other of said first and second zones
- illuminating the holographic waveguide with light arriving at one of the first and second zones,
- selectively coupling the light into the waveguide,
- guiding the rays of light in the holographic waveguide in the direction of the other of the first and second zones.

According to an embodiment, the step of providing the optical article comprises:
- applying a layer of photosensitive material on a substrate,
- dividing a beam of coherent light into at least a first and a second beam,
- producing an interference pattern within the layer of photosensitive material by the superposition of the at least first beam and second beams by
   - coupling at least the first beam into the layer of photosensitive material,
   - illuminating the layer of photosensitive material from the outside of the lens with at least the second beam,
the interference pattern inducing a refractive index modification varying spatially according to at least one frequency within the photosensitive material.

The optical article according to the invention allows directing light from one zone located on a surface of the waveguide towards the periphery thereof The light that is directed within the holographic waveguide can be selected according to its wavelength and orientation relative to the waveguide. This makes it possible to filter undesired wavelengths such as UV or blue wavelengths without reflecting them towards other users.

A sensor can also be provided at the periphery of the optical article or within a frame of the optical article, in order to measure features of the collected light. For instance, such a sensor can measure the ambient luminosity and control electrochromic (EC) or liquid crystal glasses.

The optical article also allows directing light from an emitter oriented towards the peripheral edge of the optical article to a user. It can therefore be used for example in head mounted displays applications. As the optical article is obtained by forming a holographic waveguide on a substrate, said substrate can be a curved ophthalmic lens. Therefore, the waveguide can be easily integrated in a curved ophthalmic lens and the resulting eyeglasses comprising a head mounted display can be lighter, more aesthetic, and less bulky.

### Brief description of the drawings

Further details, aspects and embodiments of the proposed solution will be described, by way of example only, with reference to the drawings.
Figures 1A, 1B and 1C illustrate an optical article according to the invention for three different embodiments.
Figures 2A, 2B and 2C illustrate the principle of a holographic waveguide.
Figures 3A, 3B and 3C illustrate different arrangements of the first and the second zones of the holographic waveguide and some of their applications.
Figures 4A and 4B illustrate a front view and a side view of a holographic waveguide comprising a coupling device.
Figure 5 illustrates an example of an optical set-up used for the recording of a holographic waveguide.

### Description

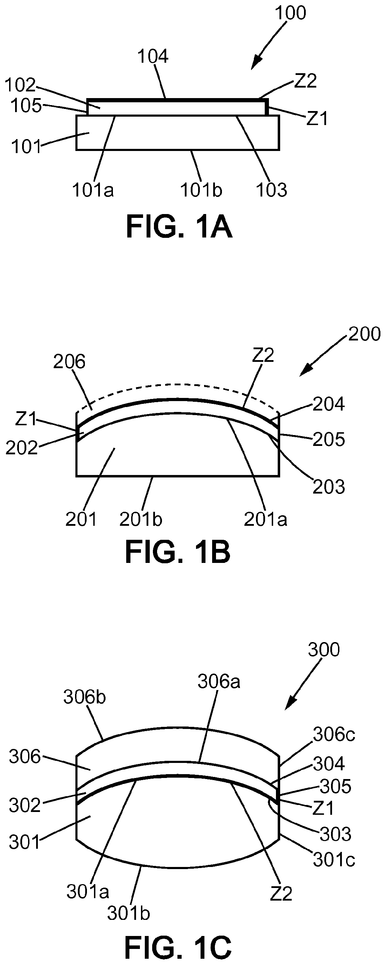

Figure 1A illustrates an optical article 100 according to a first embodiment of the invention. The optical article 100 comprises a substrate 101 and a holographic waveguide 102. The substrate 101 has a first and a second surface 101a, 101b respectively. The substrate 101 is a planar surface and may be a window, for example. The holographic waveguide 102 covers at least part of the substrate and comprises a first main surface 103, a second main surface 104 and a peripheral edge 105. The first main surface 103 thus conforms to the planar surface of the substrate 101. The second main surface 104 is substantially parallel to the first main surface 103.

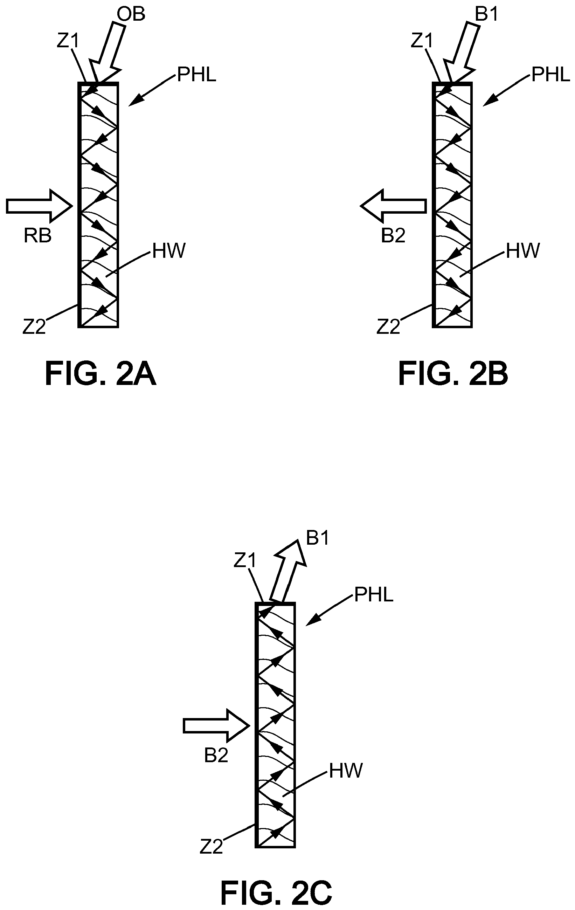

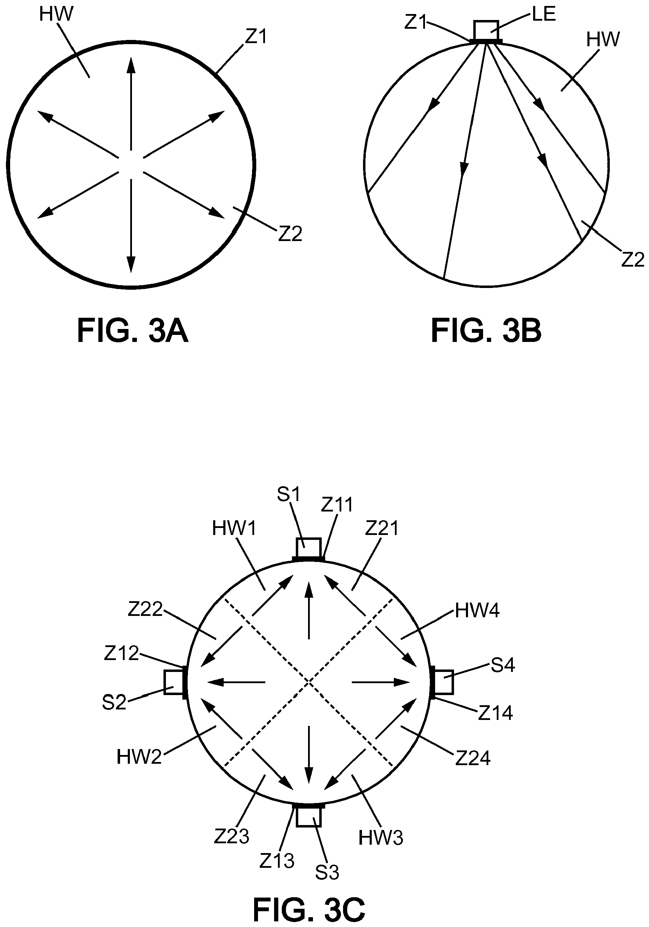

The holographic waveguide 102 further comprises a first zone Z1 and a second zone Z2. The first zone Z1 comprises at least a portion of the peripheral edge 105 of the holographic waveguide 102 and the second zone Z2 comprises at least a portion of one of the two main surfaces 103, 104 of the holographic waveguide 102. The holographic waveguide 102 is configured so that light incoming on the first zone Z1, is at least partially guided towards the second zone Z2, the first zone Z1 being an input zone and the second zone Z2 being an output zone or that light incoming on the second zone Z2 is at least partially guided towards the first zone Z1, the second zone Z2 being the input zone and the first zone Z1 being the output zone, depending on the application considered which are illustrated in reference to figures 3A, 3B and 3C. The holographic waveguide 102 will be further described in reference to figures 2A, 2B, 2C.

Figure 1B illustrates an optical article 200 according to a second embodiment. The optical article 200 comprises a substrate 201 and a holographic waveguide 202. The substrate 201 has a first and a second surface 201a, 201b respectively. At least the first surface 201 a is curved. The substrate 201 may be a semi-finished lens blank in which case the second surface 201b is planar as represented in Figure 1B. The second surface 201b is intended to be machined according to data relative to the wearer such as prescription data including spherical power and astigmatism. The substrate 201 may be an ophthalmic lens, in which case the second surface 201b is curved.

The holographic waveguide 202 covers at least part of the substrate 201 and comprises a first main surface 203, a second main surface 204 and a peripheral edge 205. The first main surface 203 conforms to the curved surface 201a of the substrate 201. The second main surface 204 is substantially parallel to the curved first main surface 203. The holographic waveguide is thus curved and the obtained semi-finished lens blank or ophthalmic lens is thus less bulky, and in particular less bulky than with the usual thick straight waveguides.

The holographic waveguide 202 further comprises a first zone Z1 and a second zone Z2 as described previously.

The optical article 200 may further comprise one or more additional layers 206. The additional layers 206 may be one or more of another holographic waveguide, a protective layer, film or wafer, a functional layer such as an antireflection coating, a polarizing layer, a layer comprising photochromic elements, a layer comprising electrochromic elements and/or an at least partly transparent conductive layer, for example. Two at least partly transparent conductive layers may be used for example to control a layer comprising electrochromic elements or to control an active holographic waveguide.

The one or more additional layers 206 may be placed on top of the holographic waveguide 202, i.e. on the second main surface 204, as represented in Figure 1B and/or below the first main surface 203 of the holographic waveguide 202. According to a variant, the substrate 201 comprises the additional layer 206 and the first surface 201a of the substrate is formed by the additional layer 206, for example.

Figure 1C illustrates an optical article 300 according to a third embodiment. The optical article 300 comprises a first substrate 301, a holographic waveguide 302 and a second substrate 306. The first substrate 301 and the second substrate 306 comprise two main surfaces 301a, 301b and 306a, 306b, respectively. The first substrate 301 and the second substrate 306 also comprise a peripheral edge 301c and 306c, respectively. The holographic waveguide 302 comprises a first main surface 303, a second main surface 304 and a peripheral edge 305. The first main surface 303 of the holographic waveguide 302 conforms to the main surface 301a of the first substrate 301 and the second main surface 304 of the holographic waveguide 302 conforms to the first surface 306a of the second substrate 306. The holographic waveguide is thus embedded within the optical article 300 between the first and the second substrate 301, 306. The holographic waveguide 302 further comprises a first zone Z1 and a second zone Z2 as described previously.

The optical article 300 may be an ophthalmic lens, in which case the external surfaces 306b and 301b are preferably curved as represented in Figure 1C. The optical article 300 may also be a semi-finished blank, in which case only one of the external surfaces 306b or 301b is curved.

The first and second surfaces 303, 304 of the holographic waveguide 302 are preferably substantially parallel to each other. The internal surfaces 301a and 306a of the first and second substrates 301, 306 may have the same radius of curvature than the external surfaces 306b and 301b. In an alternative, the internal surfaces 301a and 306a of the first and second substrates 301, 306 may be flat..

In the embodiments of figure 1B and 1C, the optical articles 200, 300 may be a semi-finished lens blank or an ophthalmic lens and one of the main surfaces, the rear surface, is intended to be directed in the direction of an eye of the wearer and the other main surface, the front surface, is intended to be directed towards an exterior environment.

The optical article 300 may be formed by injection of the photosensitive material between the first and second substrates 301, 306, the first and the second substrates 301, 306 being maintained at a given distance corresponding to the width of the holographic waveguide and part of the space between the two substrates 301, 306 being occluded on its periphery. According to another variant, the holographic waveguide 302 may be bonded to the internal surfaces 301a and 306a of the first and second substrates 301, 306. When the holographic waveguide is an active holographic waveguide, the active holographic waveguide is surrounded by two at least partly transparent conductive layers which are bonded to the internal surfaces 301a and 306a of the first and second substrates 301, 306.

The optical article 300 may also be a window, in which case both external surfaces 306b or 301b are planar.

It may be noted that the holographic waveguide may extend over at least 10% of the surface of one of the substrates described previously, preferably over at least 50% of said surface, even more preferably over at least 70% of said surface and even more preferably over the whole surface of the substrate.

Holographic waveguides are formed of a photosensitive material comprising a refractive index that varies spatially according to at least one frequency. Holographic waveguides are recorded using a holographic set-up. Holographic waveguides may be passive or active. Active holographic waveguides may, for example, be activated or deactivated, when the photosensitive material is mixed with liquid crystals. Examples of active holographic gratings are holographic polymer dispersed liquid crystals (H-PDLC) disclosed in WO2017/005608, Polycrips or Polyphems as described in the document EP 2187254 A1, for example.

Figure 2A illustrates schematically the recording of a holographic waveguide HW in a photosensitive layer PHL formed by the photosensitive material. The photosensitive material may be a photopolymer or dichromated gelatin, for example, and is deposited on a substrate (not represented) such as the ones previously described.

Photopolymers may be in any physical state (liquid, solid, paste, etc.) and include those solid and those liquid under standard conditions. Photopolymer formulations contain generally one or more monomers or oligomers presenting for instance an ethylenically unsaturated photo polymerizable part and a system of photo-initiation of polymerization with at least one component that is sensitive to the illumination wavelength. They may contain a combination of a photo- initiator and a photo-sensitizer that allow the increase of the range of the spectral sensitivity for visible light.

These photopolymer formulations may contain various additives such as, in a not exhaustive list, polymers, solvents, plasticizers, transfer agents, surfactants, anti-oxidizing agents, thermal stabilizers, anti-foaming agents, thickeners, levelling agents, catalysts and so on.

Examples of photopolymers include commercial photopolymers, such as OmniDex (E.I. du Pont de Nemours (EP 0377182 A2)), Bayfol HX (formerly Bayer, nowadays Covestro), Darol (Polygrama) or SM-TR Photopolymer (Polygrama).

The photopolymer formulations may also be mixed with liquid crystal mixtures to form active holographic waveguides. Depending on their composition, in particular on the presence or not of solvents and on their viscosity, different types of processing can be envisaged. The formulations containing solvents can be processed in different ways, for example by spin coating, dip coating, spray or bar coating, or coating by inkjet printing of a plane substrate, for example of glass (mineral or organic), or by spin coating, dip coating, spray coating or coating by inkjet printing on a curved substrate, for example of glass (mineral or organic), in order to obtain the desired thickness. After coating, a step of evaporation of the solvent(s) is generally necessary to obtain the layer of photopolymer ready to be recorded. When the formulations do not contain solvents, they can be used in the same way if their viscosity is not too high. In this case the evaporation step is not necessary.

Some of the methods described for coating the substrate with the photosensitive material may also be applied on substrates comprising an additional layer.

The thickness of the photosensitive layer is typically comprised between 1 and 100 µm and is preferably comprised between 4 and 30 µm.

The photosensitive layer PHL is viewed from the side. Like in any holographic set- up, the layer of photosensitive material is exposed to at least two different beams: a reference beam RB and an object beam OB. The reference beam RB and the object beam OB may be formed of parallel, converging or diverging rays of light depending on the application considered.

The reference beam RB incomes on one of the two main surfaces of the photosensitive layer on the second zone Z2 and the object beam OB incomes on one edge of the photosensitive layer PHL on the first zone Z1. The object beam OB is coupled into the photosensitive layer and propagates at least partially through the photosensitive layer. The photosensitive layer forms a waveguide, as it is formed of a material having a refractive index that is higher than the refractive index of the surrounding air. The light comprised within the object beam OB is thus guided in the photosensitive layer PHL. An interference pattern is formed by the superposition of the object beam OB and the reference beam RB in the photosensitive layer. The interference pattern is recorded within the photosensitive material as a variation of the refractive index after specific processing of the photosensitive material. The refractive index of the photosensitive material thus varies spatially according to at least one frequency. In particular, the refractive index varies as a function of the intensity of the interference pattern.

When the photosensitive material is a photopolymer, the refractive index variation is induced by the polymerization of the monomers or oligomers.

When the photopolymer is mixed with liquid crystals, the refractive index variation is induced by an alternation of regions with liquid crystals and polymerized monomers or oligomers. Depending on the formulations used, the bright interference fringes may be formed by the liquid crystals or by the polymerized monomers or oligomers. By applying a tension on two electrodes formed of a conductive layer placed on both sides of the photosensitive layer in which the holographic waveguide is recorded, the liquid crystals may change their orientation and thus the effective refractive index as seen by the light going through the photosensitive layer. With an appropriate choice of the photopolymer formulations and the liquid crystal mixtures formulations, it is possible to match the refractive index in the regions comprising the liquid crystals with the refractive index in the regions comprising the polymerized photopolymer . It is thus possible to activate or deactivate the holographic waveguide depending on the tension applied on the conductive layers placed on both sides of the holographic waveguide.

When the reference beam RB and the object beam OB are formed of parallel rays of light, the refractive index varies according to one frequency depending on the angle between the reference beam RB and the object beam OB. When at least one of the RB or the object beam OB is converging or diverging, the refractive index varies spatially according to other frequencies.

Figure 2B and figure 2C illustrate schematically two different ways of reading the holographic waveguide.

In figure 2B, a beam B1 of light is incoming on the edge of the photosensitive layer PHL, on the first zone Z1. Some of the light from the beam B1 is coupled into the photosensitive layer and into the holographic waveguide. The coupled light is at least partially guided within the holographic waveguide towards the second zone Z2. The light is then coupled out of the holographic waveguide and comes out of the second zone Z2 forming a beam B2.

Only the part of the beam B1 corresponding to the object beam is efficiently coupled into the holographic waveguide HW. When the wavelength used for reading is the same wavelength as used for recording, the beam B2 coming out of the holographic waveguide corresponds to the reference beam RB such that the rays of light of B2 have the same angular repartition as the reference beam RB but propagates in the opposite direction. Otherwise, when the wavelength used for reading is different from the wavelength used for recording, the angular repartition of the rays of light of the beam B2 is dependent of the spatial refractive index variation or modification corresponding to the recorded interference pattern.

In the embodiment of figure 2B, light arriving on a zone Z1 on the edge of the holographic waveguide HW comes out of the zone Z2 on one of the main surfaces of the holographic waveguide HW with a particular angular repartition.

In figure 2C, a beam B2 of light is incoming on one of the main surfaces of the photosensitive layer PHL, on the second zone Z2. Some of the light from the beam B2 is coupled into the photosensitive layer PHL and into the holographic waveguide HW. The coupled light is at least partially guided within the holographic waveguide HW towards the first zone Z1. The light is then coupled out of the holographic waveguide HW and comes out of the holographic waveguide out of the first zone Z1 forming a beam B1. The beam B1 corresponds to the object beam OB but propagates in the opposite direction.

The part of the beam B2 corresponding to the object beam OB is efficiently coupled into the holographic waveguide HW. When the wavelength used for reading is the same wavelength as used for recording, the beam B1 coming out of the holographic waveguide corresponds to the object beam OB such that the rays of light of B1 have the same angular repartition as the object beam OB but propagates in the opposite direction. Otherwise, when the wavelength used for reading is different from the wavelength used for recording, the angular repartition of the rays of light of the beam B1 dependent on the spatial refractive index variation corresponding to the recorded interference pattern.

In the embodiment of figure 2C, light incoming on a second zone Z2 of the holographic waveguide HW with a particular angular repartition can be collected on the edge of the holographic waveguide HW in the vicinity of the first zone Z1.

The holographic waveguide HW thus enables to selectively propagate light incoming on one of the first and second zones Z1, Z2 to the other of the first and second respective zones Z2, Z1. The light coming in or out of the first and second zones has an angular repartition defined by the refractive index varying spatially along at least one frequency corresponding to the interference pattern recorded in the photosensitive material. Further, holographic waveguides selectively propagate light incoming on one of the first and second zones Z1, Z2 to the other of the first and second respective zones Z2, Z1 for specific wavelengths which are dependent of the refractive index variation corresponding to the recording of the interference pattern.

Figures 3A, 3B and 3C illustrate different non-limiting arrangements of the first and the second zones of the holographic waveguide.

Figure 3A illustrates a top view of a holographic waveguide HW comprising a first zone Z1 extending over the whole peripheral edge of the holographic waveguide and a second zone Z2 extending over one of the main surfaces of the holographic waveguide.

In such an arrangement, light arriving on the second zone Z2 may for example be collected and guided towards the first zone Z1 of the peripheral edge of the holographic waveguide. The holographic waveguide may thus be used for rejecting harmful wavelengths such as UV or some blue wavelengths comprised between 380 to 450 nm which are not transmitted through the substrate and not directed towards other users. The holographic waveguide may thus act as a selective filter. The light coming out of the first zone Z1 may be collected by an absorber or a light trap. Alternatively, the light may be collected by a photovoltaic cell, the photovoltaic cell supplying electrical power to batteries disposed within a frame of the optical device, said batteries providing in electricity the electrodes of electrochromic or liquid crystal glasses and windows or head mounted displays, for example.

Figure 3B illustrates a top view of a holographic waveguide HW comprising a first zone Z1 extending over a portion of the peripheral edge of the holographic waveguide and a second zone Z2 extending over one of the main surfaces of the holographic waveguide.

In such an arrangement as illustrated in Figure 3B, the first zone Z1 may be of the size of a light emitter LE such as a light emitting diode having a size of 2 mm². The light emitted by the light emitting diode may be guided towards the second zone Z2 of the main surface of the holographic waveguide. The holographic waveguide may thus be used for illuminating the eye of the wearer of the ophthalmic lens with a specific wavelength comprised between 470 and 510 nm, for example. Such a wavelength may be used in light therapy to treat circadian rhythm disorders such as delayed sleep phase disorder and may also be used to treat seasonal affective disorder for example.

Alternatively, the first zone Z1 may be of the size of a light sensor having a size of a few mm². Similarly to the example of figure 3A, light coming in the holographic waveguide on the second zone Z2 and coming out of the first zone Z1 may be collected by a sensor, the resulting device may then be used as a dosimeter.

Figure 3C illustrates a plurality of holographic waveguides HW1, HW2, HW3, HW4. The holographic waveguides HW1, HW2, HW3, HW4 are adjacent to each other and cover at least a part of the substrates previously described. Each holographic waveguide HW1, HW2, HW3, HW4 respectively comprises a first zone Z11, Z12, Z13, Z14 and a second zone Z21, Z22, Z23, Z24. The second zones Z21, Z22, Z23, Z24 extend over the whole surface of the holographic waveguides HW1, HW2, HW3, HW4. The first zones Z11, Z12, Z13, Z14 extend over a portion of the peripheral edge of the holographic waveguides HW1, HW2, HW3, HW4.

The different holographic waveguides HW1, HW2, HW3, HW4 may be used to collect light arriving on different portions of the substrate corresponding to the second zones Z21, Z22, Z23, Z24 of the holographic waveguides HW1, HW2, HW3, HW4 and to measure the collected light coming out of the first zones Z11, Z12, Z 13, Z14 using different sensors S1, S2, S3, S4, for example.

Such an arrangement may be used to detect light incoming on different portion of the substrate potentially from different directions and may be used to control electrochromics or liquid crystals of smart eyeglasses or windows.

Such an arrangement may also be used to detect different wavelengths incoming on different portions of the substrate and may be used to control tunable filters depending on the amount of light that is detected. Examples of tunable filters that may be used are given in WO2017/032649.

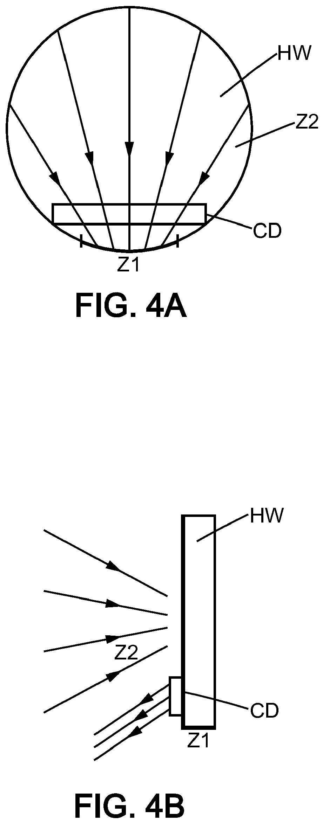

Figure 4A and 4B illustrate a front view and a side view of a holographic waveguide HW comprising a coupling device CD. The coupling device CD is located on the periphery of one of the main surfaces of the holographic waveguide. In an alternative, the coupling device CD may be located on the peripheral edge of the holographic waveguide. The coupling device is configured to couple light propagating within the holographic waveguide into or out of the holographic waveguide. The coupling device may be chosen from a coating, a protrusion and/or depression structure, a diffusing element or a Bragg grating recorded in the holographic waveguide, for example. The protrusion and/or depression structure may be formed of single protrusions or depressions positioned on the substrate in contact with the holographic waveguide for example, or a periodic succession of protrusions and/or depressions, or even more complex structures such as diffractive optical elements. Examples of such depression and/or protrusion structures are described for example in the document WO 2009/032721.

In the example of figures 4A and 4B, the light incoming on the holographic waveguide HW on the second zone Z2 on one of the main surfaces of the holographic waveguide is at least partially guided towards the first zone Z1 of the holographic waveguide HW. Part of the light guided towards the first zone Z1 is coupled out of the holographic waveguide through the coupling device CD and propagates out of the holographic waveguide HW in the direction of optical components configured to receive the light output by the coupling device. Such optical components may be sensors, photovoltaic cells, light traps or absorbers which are placed on the frame of the smart eyeglass or window.

Alternatively, light may be coupled into the holographic waveguide HW through the coupling device CD and light is then partially guided from the coupling device CD towards the second zone Z2 of the holographic waveguide HW. Optical components such as light emitters are positioned on the frame of the smart eyeglass or window in the vicinity of the holographic waveguide such that the light is emitted in the direction of the coupling device CD.

The position of the optical components within the frame of the eyeglass or window may thus be adjusted by choosing the position of the coupling device so that light emitted or received by the optical components is directed towards the coupling device. It enables more flexibility in the design and integration of optical components within the frame of eyeglasses or windows according to the invention.

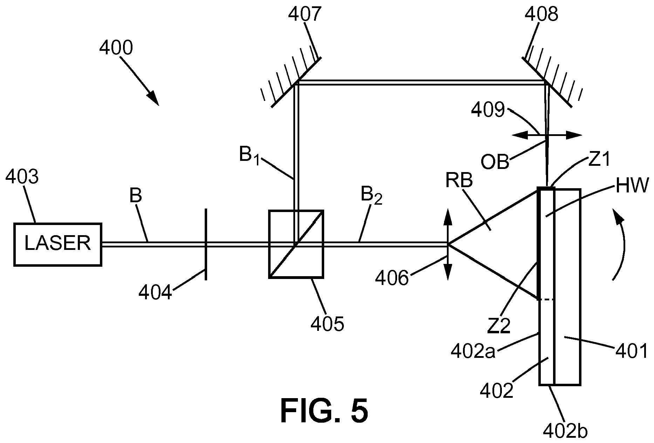

Figure 5 illustrates an example of an optical set-up used for the recording of a holographic waveguide on a photosensitive layer 402 being placed on a substrate 401.

The optical set-up 400 comprises a source of coherent light such as a laser 403 emitting light along one initial linear polarization for example, a half wavelength plate 404, a polarizing beam splitter 405, two mirrors 407, 408, a first beam forming assembly 409 and a second beam forming assembly 406.

The optical set-up 400 is adapted to produce a reference beam RB and an object beam OB from a single laser beam BO. The reference beam RB is intended to be directed towards at least a portion of a main surface 402a of the photosensitive layer 402 corresponding to the second zone Z2 of the holographic waveguide. The object beam OB is intended to be directed towards at least a portion of the peripheral edge 402b of the photosensitive layer 402 corresponding to the first zone Z1 of the holographic waveguide HW.

A laser beam B0 coming from the laser 403 has an initial linear polarization. The laser 403 may directly emit a linearly polarized beam B0 or an additional quarter wavelength plate may be used to obtain a linearly polarized beam B0. The direction of the polarization may be modified by rotating a half wavelength plate 404. The laser beam B0 is then divided into two laser beams B01 and B02 using a polarization beam splitter 405 by reflecting light having a first linear polarization and transmitting light having a second linear polarization perpendicular to the first linear polarization. The half wavelength plate 404 is rotated in order to control the respective intensity of the two laser beams B01 and B02. The first beam B01 is directed towards the peripheral edge 402b of the photosensitive layer 402 using two mirrors 407 and 408. The first beam B01 is formed into the object beam OB using the first beam forming assembly 409. The object beam OB is formed of converging rays of light and is focused into the peripheral edge 402b of the photosensitive layer 402. The reference beam RB is formed of parallel, diverging or converging rays of light depending on the application using the second beam forming assembly 406. The first and the second beam forming assemblies 406, 409 may comprise one or more lenses to form convergent or divergent beams. The first and the second beam forming assemblies 406, 409 may also comprise masks to delimitate the zones Z1, Z2 and/or matrices of liquid crystals to control the intensity and/or phase of the beams B01, B02, for example. The substrate 401 may be rotated to increase the size of the first zone Z1 of the holographic waveguide relative to the size of the focused object beam OB.

Different holographic waveguides may be recorded on a same photosensitive layer 402 by translating and rotating the substrate 401 and by adapting the position of the first and second zones on the photosensitive layer 402. The first beam forming assembly 406 may be chosen as a function of the wanted reference beam RB for each recording of a new holographic waveguide HW.

In one embodiment, after the recording of one or more holographic waveguides within a same photosensitive layer 402, the photosensitive layer may be retrieved from the substrate 401 and be placed on one of the substrates 101, 201 of figures 1A, 1B.

In another embodiment, the holographic waveguide HW is directly recorded on one of the photosensitive layers 102, 202 covering the substrates 101, 201 of the optical articles 100, 200 of figures 1A, 1B, 1C. In yet another embodiment, the photosensitive layer 302 of figure 1C is directly recorded while being embedded between the first and the second substrates 301, 306.

## Claims

1. Optical article (100; 200; 300) comprising at least:
- a substrate (101; 201; 301), and
- a holographic waveguide (102; 202; 302) covering at least part of the substrate (101; 201; 301) and comprising :
- two main surfaces (103, 104; 203, 204; 303, 304), at least one of them conforming to a surface (101a; 201a; 301a) of the substrate (101; 201; 301), and
- at least first and second zones (Z1, Z2) that are configured so that light incoming on one of the first and second zones (Z1; Z2) is at least partially guided towards the other of said first and second zones (Z2; Z1).

2. Optical article (100; 200; 300) according to claim 1 wherein:
- the holographic waveguide (102; 202; 302) further comprises one peripheral edge (105; 205; 305),
- the first zone (Z1) comprises at least a portion of the peripheral edge of the holographic waveguide, and
- the second zone (Z2) comprises at least a portion of one of the main surfaces of the holographic waveguide (102; 202; 302).

3. Optical article (100; 200; 300) according to claim 1 or 2, **characterized in that** the holographic waveguide (102; 202; 302) extends over at least 10% of the surface of the substrate, preferably over at least 50% of said surface, even more preferably over at least 70% of said surface and even more preferably over the whole surface of the substrate.

4. Optical article (100; 200; 300) according to one of the preceding claims, **characterized in that** it comprises a plurality of holographic waveguides.

5. Optical article (100; 200; 300) according to claim 4, **characterized in that** each holographic waveguide is configured to selectively propagate respectively different wavelengths of light between its respective first and second zones.

6. Optical article (100; 200; 300) according to claim 4 or 5, **characterized in that** rays of light propagated by each holographic waveguide come in or come out from the waveguide's respective second zone (Z2) according to different angles relative to the normal to said second zone.

7. Optical article (100; 200; 300) according to one of the preceding claims, **characterized in that**:
- the optical article further comprises a coupling device (CD) located on the periphery of one main surface of the waveguide, and configured to couple light propagating within the waveguide into or out of the holographic waveguide, and
- the coupling device (CD) is preferably chosen from one of a coating or a protrusion and/or depression structure.

8. Optical article (100; 200; 300) according to one of the preceding claims, **characterized in that** the first zone (Z1) extends over at least 50% of the peripheral edge of the holographic waveguide, preferably over at least 70% of said peripheral edge, even more preferably over the whole surface of said peripheral edge.

9. Optical article (100; 200; 300) according to one of the preceding claims, **characterized in that** the substrate is chosen from a group consisting of:
- a planar substrate (101),
- a curved substrate (201),
- a semi-finished lens blank (201) or an ophthalmic lens (301).

10. Optical article (200; 300) according to any of the preceding claims, **characterized in that** at least one of the main surfaces (203, 204; 303, 304), of the holographic waveguide (202; 302) extends parallel to a curved surface (201a; 301a) of the substrate (201; 301).

11. Optical article (100; 200; 300) according to any one of the preceding claims, **characterized in that** the two main surfaces of the holographic waveguide form a front surface and a rear surface, the rear surface being intended to be directed in the direction of an eye of a wearer, the front surface being intended to be directed towards an exterior environment and **in that** the second zone is an input zone and the first zone is an output zone.

12. Optical device (100; 200; 300) comprising:
- an optical article according to any of claims 1 to 11, and further comprises
- at least a sensor (S1, S2, S3, S4), a photovoltaic cell, a light trap or an absorber configured to receive light output at the first zone (Z1) or by a coupling device (CD) according to claim 7, or
- at least a light emitter (LE) configured to emit light intended to be coupled into the holographic waveguide (HW) towards the second zone (Z2).

13. Optical device (100; 200; 300) according to claim 12, **characterized in that** the optical article (100; 200; 300) is intended to be mounted on a frame and **in that** said at least a sensor (S1, S2, S3, S4), a photovoltaic cell, a light trap, an absorber or a light emitter (LE) is placed on the frame in the vicinity of the holographic waveguide.

14. Method for selectively propagating light in a substrate comprising the steps of:
- providing an optical article (100; 200; 300) comprising a substrate (101; 201; 301), and a holographic waveguide (102; 202; 302) covering at least part of the substrate (101; 201; 301) and comprising:
- two main surfaces (103, 104; 203, 204; 303, 304), at least one of them conforming to a surface (101a; 201a; 301a) of the substrate (101; 201; 301), and
- at least first and second zones (Z1, Z2) that are configured so that light incoming on one of the first and second zones (Z1; Z2) is at least partially guided towards the other of said first and second zones (Z2; Z1)
- illuminating the holographic waveguide (102; 202; 302) with light arriving at one of the first and second zones (Z1; Z2),
- selectively coupling the light into the waveguide,
- guiding the rays of light in the holographic waveguide in the direction of the other of the first and second zones (Z2; Z1).

15. Method according to claim 14, **characterized in that** the step of providing the optical article comprises:
- applying a layer of photosensitive material (402) on a substrate (401),
- dividing a beam of coherent light (B0) into at least a first and a second beams (B01, B02),
- producing an interference pattern within the layer of photosensitive material (402) by the superposition of the at least first beam and second beam (RB, OB) by
- coupling at least the first beam (OB) into the layer of photosensitive material (402),
- illuminating the layer of photosensitive material from the outside of the lens
with at least the second beam (RB),
the interference pattern inducing a refractive index modification varying spatially according to at least one frequency within the photosensitive material (402).
